# EUROPÄISCHE PATENTSCHRIFT

(11) **EP 3 508 037 B1**
(45) Veröffentlichungstag und Bekanntmachung des Hinweises auf die Patenterteilung: **01.01.2020**
(21) Anmeldenummer: 17804473.1
(22) Anmeldetag: 09.11.2017
(51) Int. Cl.: H05B 37/02, F21W 131/406

(54) **VERFAHREN ZUR STEUERUNG EINER BELEUCHTUNGSANLAGE MIT EINEM LICHTSTELLPULT**
METHOD FOR CONTROLLING A LIGHTING SYSTEM WITH A LIGHTING ADJUSTING CONSOLE
PROCÉDÉ DE COMMANDE D'UNE INSTALLATION D'ÉCLAIRAGE AVEC UN PUPITRE DE RÉGLAGE DE LUMIÈRE

(43) Veröffentlichungstag der Anmeldung: 10.07.2019
(73) Patentinhaber: MA Lighting Technology GmbH, 97297 Waldbüttelbrunn (DE)
(72) Erfinder: ADENAU, Michael, 97082 Würzburg (DE)
(74) Vertreter: advotec.
(86) Internationale Anmeldenummer: PCT/EP2017/078712
(87) Internationale Veröffentlichungsnummer: WO 2019/091555

(56) Entgegenhaltungen:
- US-A- 5 791 755
- US-A- 5 900 685
- US-A1- 2011 080 098
- Anonymous: "Move In Black", , 2. April 2016 (2016-04-02), XP055489704, http://www.horizoncontrol.com Gefunden im Internet: URL:https://web.archive.org/web/2016040212 1540/http://www.horizoncontrol.com/mqhelp/ general_help/move_in_black.htm [gefunden am 2018-07-03]

## Beschreibung

Die Erfindung betrifft ein Verfahren zur Steuerung einer Beleuchtungsanlage mit einem Lichtstellpult nach dem Oberbegriff des Anspruchs 1.

Lichtstellpulte dienen zur Steuerung von Beleuchtungsanlagen, wie sie beispielsweise in Theatern und Konzerten zum Einsatz kommen. Diese Beleuchtungsanlagen umfassen regelmäßig eine Vielzahl von Beleuchtungseinrichtungen, beispielsweise Bühnenscheinwerfern, wobei die Beleuchtungseinrichtung vielfach auch noch für sich genommen zwischen einer Vielzahl von Beleuchtungszuständen, beispielsweise unterschiedlichen Farben, umgeschaltet werden können. Diese unterschiedlichen Beleuchtungszustände werden durch programmierte Parameter im Beleuchtungsprogramm des Lichtstellpults gesteuert. Übliche Beleuchtungsanlagen können dabei bis zu mehrere tausend Beleuchtungseinrichtungen umfassen.

Mit jeder Beleuchtungseinrichtung kann zumindest ein Lichteffekt, beispielsweise ein Lichtstrahl erzeugt werden, um die Bühne mit diesen Lichteffekten, die sich vielfach überlagern, zu beleuchten. Das gattungsgemäße Verfahren betrifft dabei die Steuerung von Beleuchtungseinrichtungen, die mit zumindest einem Stellmotor verstellt werden können, um verschiedene Positionierungen der Beleuchtungseinrichtung anfahren zu können. Handelt es sich bei der Beleuchtungseinrichtung beispielsweise um einen Bühnenscheinwerfer, so kann der Lichtstrahl des Scheinwerfers durch Verfahren der entsprechenden Stellmotoren in zwei Achsen frei über die Bühne verschwenkt werden, um beispielsweise dem Hauptdarsteller zu folgen.

Aus dem Stand der Technik ist ein Beleuchtungsverfahren bekannt, dass als "Move in Black" bezeichnet wird. Bei diesem "Move in Black"-Verfahren ist es das Ziel, dass vor dem Anfahren einer neuen Positionierung der Beleuchtungseinrichtung der entsprechende Lichteffekt der Beleuchtungseinrichtung vollständig abgeschaltet wird, um zu verhindern, dass die Bewegung des Scheinwerfers während des Anfahrens der nächsten Position vom Zuschauer als bewegter Lichteffekt wahrgenommen werden kann. Das "Move in Black"-Steuerungskonzept beruht dabei im Wesentlichen auf drei Schritten. Im ersten Schritt wird zunächst die Beleuchtungseinrichtung programmgesteuert abgeschaltet, sodass von der Beleuchtungseinrichtung kein Lichteffekt mehr ausgeht. Nach vollständigem Erlöschen der Beleuchtungseinrichtung wird der Stellmotor sofort oder nach einer bestimmten Wartezeit vom Lichtstellpult programmgesteuert aktiviert, um mit den Stellmotoren die nächste vordefinierte Positionierung der Beleuchtungseinrichtung anzufahren. Im dritten Schritt wird dann die Beleuchtungseinrichtung nach Erreichen der vordefinierten Positionierung wieder eingeschaltet, um einen Lichteffekt zu erzeugen. Das Ein- bzw. Abschalten der Beleuchtungseinrichtung kann selbstverständlich auch in der Art eines Abdimmvorganges erfolgen, bei dem die Leuchtstärke der Beleuchtungseinrichtung entlang einer Dimmkurve herunter geregelt bzw. aufgeregelt wird.

Durch das "Move in Black"-Verfahren werden unerwünschte optische Effekte durch das Verfahren einer Beleuchtungseinrichtung mit eingeschalteter Lichtquelle vermieden. Allerdings kann es auch beim "Move in Black"-Verfahren zu anderen unerwünschten Beeinträchtigungen der Bühnenshow kommen, nämlich durch unerwünschte akustische Störungen. Abhängig von der Bauart der jeweiligen Beleuchtungseinrichtung können nämlich durch den Antrieb der Stellmotoren erhebliche Motorengeräusche entstehen, die bei entsprechend geringer Umgebungslautstärke die Bühnenshow akustisch beeinträchtigen. Wird zum Beispiel auf einer Theaterbühne in einer Szene ein Monolog eines Schauspielers dargestellt, so ist es im Theatersaal zu dieser Zeit weitgehend still. Würde in einer solchen Monologszene dann ein Bühnenscheinwerfer zur Vorpositionierung in der nächsten vordefinierten Beleuchtungsposition verfahren, so würde dies von den Zuschauern als erhebliche akustische Störung wahrgenommen.

Aufgabe der vorliegenden Erfindung ist es deshalb, ein Fortentwickeltes "Move in Black"-Verfahren vorzuschlagen, mit dem akustische Störungen durch das Verfahren der Beleuchtungseinrichtungen vermieden werden können.

Diese Aufgabe wird durch ein Verfahren nach der Lehre des Anspruchs 1 gelöst.

Vorteilhafte Ausführungsformen der Erfindung sind Gegenstand der Unteransprüche.

Das erfindungsgemäße Verfahren beruht auf der Grundüberlegung, mit einem Mikrofon die Umgebungslautstärke an einer geeigneten Stelle, beispielsweise in der Mitte des Zuschauerraumes, zu messen, das Mikrofon kann beispielsweise im Lichtstellpult selbst eingebaut sein oder mit dem Lichtstellpult mit einer entsprechenden Leitung verbunden werden. Durch die Messung mit dem Mikrofon kann durch physikalische Messung festgestellt werden, ob die Umgebungslautstärke so hoch ist, dass die Verfahrgeräusche der Stellmotoren problemlos überdeckt werden, oder ob es auf der Bühne bzw. im Zuschauerraum so leise ist, dass ein Verfahren der Stellmotoren eine relevante akustische Störung darstellt. Abhängig von dieser Beurteilung, d.h. in Abhängigkeit von der gemessenen Umgebungslautstärke, erfolgt dann die Verstellung der Beleuchtungseinrichtung mit den Stellmotoren.

In welcher Abhängigkeit das Verfahren der Beleuchtungseinrichtung von der jeweils gemessenen Umgebungslautstärke erfolgt, ist grundsätzlich beliebig. Gemäß einer bevorzugten Ausführungsform ist es vorgesehen, dass die Verstellung der Beleuchtungseinrichtung durch Antrieb mit dem zugeordneten Stellmotor erst gestartet wird, nachdem die gemessene Umgebungslautstärke eine vorgegebene Lautstärkeschwelle überschritten hat. Dadurch kann insbesondere verhindert werden, dass die Stellmotoren zum Anfahren der nächsten Positionierung der Beleuchtungseinrichtung eingeschaltet werden, wenn es aufgrund der sehr geringen Umgebungslautstärke als störend empfunden wird. Sobald die Umgebungslautstärke dann die vorgegebene Lautstärkeschwelle überschreitet, beispielsweise wegen des Applauses des Publikums, können die Stellmotoren dann problemlos durch Verfahren der Stellmotoren verstellt werden.

Erfolgt die Ansteuerung der Stellmotoren in Abhängigkeit der gemessenen Umgebungslautstärke, insbesondere wenn die Stellmotoren erst gestartet werden, nachdem die gemessene Umgebungslautstärke eine vorgegebene Lautstärkeschwelle überschritten hat, so kann das zu dem Problem führen, dass die Umgebungslautstärke die entsprechende Schwelle in keinem Zeitpunkt überschreitet und deshalb ein Anfahren der nächsten vordefinierten Positionierung der Beleuchtungseinrichtung nicht erfolgen kann. In diesem Fall würde das Beleuchtungsprogramm seinen Zweck nicht mehr erfüllen können, da der gewünschte Beleuchtungseffekt dann aufgrund der fehlenden Vorpositionierung nicht erzielbar ist. Um dies in jedem Falle ausschließen zu können, ist gemäß einer bevorzugten Ausführungsform vorgesehen, dass die Verstellung der Beleuchtungseinrichtung durch Antrieb mit dem zugeordneten Stellmotor zu einem Zeitpunkt, der um die Verfahrzeit, die zum Anfahren der nächsten Position erforderlich ist, vor dem Zeitpunkt des nächsten programmgesteuerten Einschaltens der Beleuchtungseinrichtung liegt, unabhängig von der gemessenen Umgebungslautstärke eingeschaltet wird. Dies bedeutet mit anderen Worten, dass spätestens zu dem Zeitpunkt, der noch genügend Zeit für das Anfahren der nächsten vordefinierten Positionierung lässt, die Stellmotoren eingeschaltet werden, auch wenn die vorgegebene Lautstärkeschwelle bis dahin noch nicht überschritten wurde. Dadurch wird in jedem Falle die Einhaltung der programmgesteuerten Lichteffekte gewährleistet und gegebenenfalls eine kleine akustische Beeinträchtigung toleriert.

Bei einem programmgesteuerten Ablauf entsprechender Beleuchtungsprogramme werden die Beleuchtungseinrichtungen programmgesteuert abgeschaltet bzw. eingeschaltet. Die Lichtszenen sind dabei in einzelnen Beleuchtungsschritten vordefiniert, die nacheinander ablaufen. Um den Benutzer des Lichtstellpults die Möglichkeit zu geben, für einzelne Programmschritte eine Verstellung der Beleuchtungseinrichtung zwingend auszuschließen, können die entsprechenden Programmschritte im Programmablauf derart gekennzeichnet werden, dass die Verstellung der Beleuchtungseinrichtung durch Verfahren mit dem zugeordneten Stellmotor in diesen Programmschritten unabhängig von der gemessenen Umgebungslautstärke ausgeschlossen ist.

## Patentansprüche

1. Verfahren zur Steuerung einer Beleuchtungsanlage mit einem Lichtstellpult, wobei im Lichtstellpult digitale Stellbefehle erzeugt werden, die über Datenverbindungen an eine Beleuchtungseinrichtung der Beleuchtungsanlage übertragen werden, wobei durch Ansteuerung der Beleuchtungseinrichtungen jeweils ein Lichteffekt erzeugt werden kann, und wobei zumindest eine verstellbare Beleuchtungseinrichtung mit zumindest einem Stellmotor verstellt werden kann, um die verschiedenen Positionierungen der Beleuchtungseinrichtung anfahren zu können,
mit folgenden Verfahrensschritten,
a) programmgesteuertes Abschalten der verstellbaren Beleuchtungseinrichtung, so dass kein Lichteffekt von der Beleuchtungseinrichtung ausgeht;
b) programmgesteuerter Antrieb des Stellmotors zum Anfahren der nächsten vordefinierten Positionierung der Beleuchtungseinrichtung;
c) programmgesteuertes Einschalten der Beleuchtungseinrichtung zur Erzeugung eines Lichteffekts in der angefahrenen Positionierung;
**dadurch gekennzeichnet**
**dass** die Umgebungslautstärke mit einem Mikrophon gemessen wird, wobei die Verstellung der Beleuchtungseinrichtung durch Antrieb mit dem zugeordneten Stellmotor in Abhängigkeit von der gemessenen Umgebungslautstärke erfolgt.

2. Verfahren nach Anspruch 1,
**dadurch gekennzeichnet,**
**dass** die Verstellung der Beleuchtungseinrichtung durch Antrieb mit dem zugeordneten Stellmotor erst gestartet wird, nachdem die gemessene Umgebungslautstärke eine vorgegebene Lautstärkeschwelle überschritten hat.

3. Verfahren nach Anspruch 1 oder 2,
**dadurch gekennzeichnet,**
**dass** die Verstellung der Beleuchtungseinrichtung durch Antrieb mit dem zugeordneten Stellmotor zu einem Zeitpunkt, der um die Verfahrzeit, die zum Anfahren der nächsten Position erforderlich ist, vor dem Zeitpunkt des nächsten programmgesteuerten Einschaltens der Beleuchtungseinrichtung liegt, unabhängig von der gemessenen Umgebungslautstärke eingeschaltet wird.

4. Verfahren nach einem der Ansprüche 1 bis 3,
**dadurch gekennzeichnet,**
**dass** zwischen dem programmgesteuerten Abschalten der Beleuchtungseinrichtung und dem programmgesteuerten Einschalten der Beleuchtungseinrichtung mehrere Programmschritte eines Beleuchtungsprogramms ablaufen, wobei für zumindest einen Programmschritt eine Verstellung der Beleuchtungseinrichtung durch Antrieb mit dem zugeordneten Stellmotor unabhängig von der gemessenen Umgebungslautstärke programmgesteuert ausgeschlossen ist.

## Claims

1. A method for controlling a lighting system using a lighting control console, wherein digital adjusting commands are generated in the lighting control console, which commands are transmitted to a lighting device of the lighting system via data links, wherein one light effect can in each case be generated by actuating the lighting devices, and wherein at least one adjustable lighting device can be adjusted using at least one actuator in order to be able to move towards the different positions of the lighting device, having the following method steps,
a) switching off the adjustable lighting device under program control such that the lighting device generates no light effect;
b) driving the actuator, under program control, for moving towards the next predefined position of the lighting device;
c) switching on the lighting device, under program control, for generating a light effect in the position to which it has been moved;
**characterised in that**
the ambient noise level is measured using a microphone, the lighting device being adjusted by driving it with the assigned actuator as a function of the measured ambient noise level.

2. The method according to claim 1,
**characterised in that**
the adjustment of the lighting device by driving it using the assigned actuator is only started after the measured ambient noise level has exceeded a predetermined noise threshold.

3. The method according to claim 1 or 2,
**characterised in that**
the adjustment of the lighting device by driving it using the assigned actuator is started, irrespective of the measured ambient noise level, at a point of time lying ahead, by the travel time that is needed for moving towards the next position, of the point of time of the next switching-on of the lighting device under program control.

4. The method according to any one of claims 1 to 3,
**characterised in that**
multiple program steps of a lighting program are run between the lighting device being switched off under program control and the lighting device being switched on under program control, an adjustment of the lighting device by driving it using the assigned actuator irrespective of the measured ambient noise level being precluded for at least one program step under program control.

## Revendications

1. Procédé pour commander un système d'éclairage à l'aide d'un pupitre de commande d'éclairage, des instructions de réglage numériques qui sont transmises à un dispositif d'éclairage du système d'éclairage par des liaisons de données étant générées dans le pupitre de commande d'éclairage, un effet lumineux chaque fois pouvant être généré en actionnant les dispositifs d'éclairage, et au moins un dispositif d'éclairage ajustable pouvant être ajusté à l'aide d'un servomoteur afin de pouvoir avancer vers les positions différentes du dispositif d'éclairage,
ayant les étapes de procédé suivantes,
a) arrêter le dispositif d'éclairage ajustable de manière dirigée par un programme de sorte qu'aucun effet lumineux émane du dispositif d'éclairage ;
b) entraîner le servomoteur de manière dirigée par un programme pour avancer vers la prochaine position prédéfinie du dispositif d'éclairage ;
c) mettre le dispositif d'éclairage en marche de manière dirigée par un programme pour générer un effet lumineux dans la position vers laquelle le dispositif d'éclairage a été avancé ;
**caractérisé en ce que**
le niveau du bruit ambiant est mesuré à l'aide d'un microphone, l'ajustage du dispositif d'éclairage étant effectué en entraînant celui-ci à l'aide du servomoteur associé en fonction du niveau du bruit ambiant mesuré.

2. Procédé selon la revendication 1,
**caractérisé en ce que**
l'ajustage du dispositif d'éclairage moyennant l'entraînement à l'aide du servomoteur associé est seulement commencé dès lors que le niveau du bruit ambiant mesuré a dépassé un seuil de bruit prédéfini.

3. Procédé selon la revendication 1 ou 2,
**caractérisé en ce que**
l'ajustage du dispositif d'éclairage moyennant l'entraînement à l'aide du servomoteur associé est commencé, indépendamment du niveau du bruit ambiant mesuré, à un moment qui est, du temps de déplacement qui est nécessaire pour avancer vers la prochaine position, avant le moment de la prochaine mise en marche du dispositif d'éclairage de manière dirigée par un programme.

4. Procédé selon l'une quelconque des revendications 1 à 3,
**caractérisé en ce que**
plusieurs étapes de programme d'un programme d'éclairage se déroulent entre l'arrêt du dispositif d'éclairage de manière dirigée par un programme et la mise en marche du dispositif d'éclairage de manière dirigée par un programme, un ajustage du dispositif d'éclairage moyennant l'entraînement à l'aide du servomoteur associé indépendamment du niveau du bruit ambiant mesuré étant exclu de manière dirigée par un programme pour au moins une étape de programme.
